Europäisches Patentamt

European Patent Office

Office européen des brevets

(19)

(11) Veröffentlichungsnummer: **0 406 426 A1**

(12)

# EUROPÄISCHE PATENTANMELDUNG
## veröffentlicht nach Art. 158 Abs. 3 EPÜ

(21) Anmeldenummer: 89906487.7

(22) Anmeldetag: 21.02.89

(86) Internationale Anmeldenummer: PCT/SU89/00049

(87) Internationale Veröffentlichungsnummer: WO 89/10685 (16.11.89 89/27)

(51) Int. Cl.5: **A01J 7/00**

---

(30) Priorität: 05.05.88 SU 4413031

(43) Veröffentlichungstag der Anmeldung: **09.01.91 Patentblatt 91/02**

(84) Benannte Vertragsstaaten: **DE FR GB IT NL SE**

(71) Anmelder: **LATVIISKAYA SELSKOKHOZYAISTVENNAYA AKADEMIA ul. Lenina, 2 Elgava Latviiskaya SSR, 229600(SU)**

(72) Erfinder: **MOSKVIN, Gennady Alexeevich ul. Satixmes, 49-59 Elgava Latviiskaya SSR, 229601(SU)**

(74) Vertreter: **Patentanwälte Zellentin & Partnerner Zweibrückenstrasse 15 D-8000 München 2(DE)**

---

(54) **VORRICHTUNG ZUM AUTOMATISCHEN MESSEN DER DURCH EINE MELKANLAGE GEMOLKENEN MILCHMENGE.**

(57) Die Einrichtung zur automatischen Messung der von einer Melkanlage ermolkenen Milchmenge enthält einen Schwimmermilchzähler (1) zur Messung der Milch (3), der mit einer Vakuummilchleitung (23) und einem Vakuummilchsammelgefäss (25) verbunden ist, welches mit einem Vakuumsystem (27) und mit einer Milchpumpe (33) in Verbindung steht, welche, ihrerseits, mit einer Einheit (36) zur Einstellung des Schwimmermilchzählers (1) zur Messung der Milch (3) auf eine optimale Dosis der frisch von einer Kuh ermolkenen Milch (3) verbunden ist.

EP 0 406 426 A1

## EINRICHTUNG ZUR AUTOMATISCHEN MESSUNG DER VON EINER MELKANLAGE ERMOLKENEN MILCHMENGE

### Technisches Gebiet

Die vorliegende Erfindung bezieht sich auf Melkanlagen und betrifft insbesondere Einrichtungen zur automatischen Messung der von einer Melkanlage ermolkenen Milchmenge.

### Stand der Technik

Für die Durchführung einer planmässigen und wirksamen Arbeit zur Verbesserung einer Kuhherde und der Erhöhung der Milcherträge, für die Bestimmung der Futterration zur Fütterung der Kühe sowie für die Durchführung von kommerziellen Verrechnungen mit dem Abnehmer braucht man eine genaue, zuverlässige und objektive Information über die Milcherträge.

Das Hauptproblem einer genauen Messung von in Milchfarmen ermolkenen Milchmengen besteht darin, dass die mathematischen und physikalischen Modelle des Prozesses der Messung von Milcherträgen nicht übereinstimmen, wobei diese Nichtübereinstimmung durch den Unterschied zwischen den idealen und realen Bedingungen des Betriebs, sowie durch den Einfluss der Milcheigenschaften auf die Messgenauigkeit hervorgerufen ist.

Ausserdem sind die Eigenschaften des zu messenden Mediums, d.h. der Milch, einzigartig und weisen eine breite Parameterstreuung auf. Einen wesentlichen Einfluss auf das Problem der genauen Messung der Milcherträge auf Melkanlagen üben die spezifischen Besonderheiten der Arbeit und des Betriebes von konkreten Typen der Melkanlagen und der anzuwendenden Konstruktionen der Milchzähler aus, was eine Einzeleinstellung der Milchzähler auf die Auslieferung von optimalen Milchdosen während des Melkens der Kühe mittels der Melkanlagen erforderlich macht. Die Möglichkeiten der klassischen Verfahren zur Erhöhung der Genauigkeit der Messung von Milcherträgen durch eine konstruktive Optimierung der Messkammer der Milchzähler, welche nach dem Prinzip des Dosierens der Milchmasse nach dem Stand und Volumen derselben in der Messkammer betrieben werden, sind zur Zeit beinahe erschöpft.

Es ist eine Einrichtung zur automatischen Messung der von einer Melkanlage ermolkenen Milchmenge bekannt, enthaltend einen Schwimmermilchzähler, der eine miteinander in Verbindung stehende Aufnahmekammer und eine Messkammer sowie einen in der Aufnahmekammer untergebrachten Schwimmer aufweist, wobei der Schwimmer mit einem Ventil an einem Hohlschaft angeordnet ist, der im Oberteil, welches über die Aufnahmekammer hinaustritt, eine Öffnung sowie ein offenes unteres Ende hat und mit einer Einrichtung zur Registrierung der Milchmenge in Wechselwirkung steht, und die Messkammer des Zählers über einen Austrittsstutzen mit einer Vakuummilchleitung der Melkanlage verbunden ist (SU, A, 657260).

Bei der genannten Einrichtung wird die Milch beim Anfüllen der Messkammer des Zählers mit Milch während des Melkens der Kühe durch eine in der Trennwand ausgebidete Öffnung aus der Messkammer in die Aufnahmekammer zugeführt. Infolge der Hebung des Milchstandes in der Aufnahmekammer taucht der Schwimmer mit dem Schaft und Ventil bis zum Stand der Füllung der Aufnahmekammer mit Milch auf, und die Öffnung in der Trennwand wird durch das Ventil abgesperrt. Der Oberteil des Hohlschaftes geht über die Grenzen der Aufnahmekammer hinaus, so dass die Messkammer durch die Öffnung dieses Oberteils und den Hohlraum des Schaftes mit der Atmosphäre verbunden wird. Infolge des Druckunterschiedes wird die Milch über den Austrittsstutzen aus der Messkammer in die Vakuummilchleitung verdrängt. Von dem Schaft, an dem Schwimmer und Ventil angebracht sind, wird die Hebungskraft des Schwimmers auf die Einrichtung zur Registrierung übertragen, welche die Milchportion im oberen Punkt der Hebung des Schaftes registriert, wonach der Schaft unter Einwirkung des Eigengewichtes niedergeht und der Prozess der Messung und der Registrierung von einzelnen Dosen automatisch wiederholt wird.

Die genannte Einrichtung weist einen grösseren Fehler bei der Auslieferung von einzelnen Milchdosen auf, welche von der Messkammer des Zählers gemessen werden, weil die Messung von einzelnen Milchdosen mit einer wesentlichen Ungenauigkeit behaftet ist, welche darauf zurückzuführen ist, dass ein unvollkommenes Prinzip der Kontakt-Registrierung verwendet wird, bei dem die mechanische Kraft von dem Schaft infolge der Hebung des Schwimmers beim Anfüllen der Messkammer mit Milch auf die Einrichtung zur Registrierung der Milchmenge übertragen wird.

Dabei wird die Anzahl der Auslösungen des Ventils, das am Schaft des Schwimmers angeordnet ist, und nicht die tatsächliche Milchmenge automatisch gezählt, die von der Messkammer gemessen wird. Das Verhältnis zwischen der Anzahl der Auslösungen des Ventils der Messkammer zur Milchmessung und der Anzahl der Dosen der ermolkenen Milch wird in der genannten Einrichtung nicht realisiert. Deshalb ist die Genauigkeit der Arbeit dieser Einrichtung nicht hoch.

Es ist eine Einrichtung zur automatischen Messung der von einer Melkanlage ermolkenen Milchmenge bekannt, u.zw. der elektronische Milchmesser "Surge", der für die Verwendung in automatisierten Milchfarmen bestimmt ist, welche nach dem automatisierten System "Dairy Manager" gesteuert werden; dieses System umfasst eine Aufnahme- und eine Messkammer für Milch, welche durch eine Trennwand voneinander getrennt sind, einen Schaft mit einem an diesem befestigten Ventil in der Messkammer und einem Schwimmer in der Aufnahmekammer, sowie ein Zählwerk zur Registrierung von Milchdosen, welche von einer Melkanlage ermolkenen sind (Babson Bros.Co., USA, f. "Surge", 1987).

Die Fixierung von einzelnen Milchdosen mittels der genannten Einrichtung erfolgt ebenfalls mit Hilfe des Ventils in der Messkammer je nach dem Füllstand mit Milch beim Melken der Kühe. Das Zählwerk des Milchmengenzählers wird vom Schwimmer mechanisch beaufschlagt, was einen Fehler bei der Messung von einzelnen Milchdosen entstehen lässt.

Es ist eine Einrichtung zur automatischen Messung der von einer Melkanlage ermolkenen Milchmenge bekannt, enthaltend einen Schwimmermilchzähler, dessen Aufnahmekammer mittels eines Eintrittsstutzens mit einer Vakuummilchleitung der Melkanlage verbunden ist und dessen miteinander in Verbindung stehende Aufnahmekammer und Messkammer mittels Austrittsstutzen mit einem Vakuummilchsammelgefäss der Melkanlage verbunden sind, das mit dem Vakuumsystem und der Milchpumpe der Melkanlage verbunden ist, und einen in diesen untergebrachten Hohlschaft aufweisen, wobei am unteren Ende dieses Schaftes ein Ventil und am oberen Ende ein Magnet angeordnet ist, welcher bei der Bewegung des Schaftes mit einer Gerkon-Einrichtung zusammenwirkt, die mit einer digitalen elektronischen Recheneinheit zur Registrierung der von der Melkanlage ermolkenen Milchmenge elektrisch verbunden ist (SU, A, 1345059).

Von der genannten Vorrichtung werden die Eigenschaften des zu messenden Mediums, der Milch, dadurch berücksichtigt, dass in den Speicher der elektronischen Recheneinheit Koeffizienten zur Korrektur der Anzeige am Milchzähler je nach den Abweichungen der Ist-Anzeige desselben vom Normal der von der Melkanlage ermolkenen Milchmenge eingegeben werden.

Auf diese Weise ist bei der genannten Einrichtung die Genauigkeit bei der Bestimmung der Milchmenge wesentlich davon abhängig, auf welches entnommene Volumen der ermolkenen Milch die Vorrichtung eingestellt wird. Da beim Melken unter realen Verhältnissen das Volumen der Milchentnahme immer eine Zufallsgrösse ist (der Gesamtmilchertrag ist niemals im voraus bekannt), entsteht folglich ein Anzeigefehler, der durch Differenz zwischen den Ergebnissen einer genauen Einstellung der Einrichtung auf das vorgegebene Volumen der Entnahme und dem real erhaltenen Volumen der Entnahme von einzeln gemessenen Dosen der frisch gemolkenen Milch hervorgerufen wird, was die Zuverlässigkeit und die Genauigkeit der Messungen vermindert.

Der vorliegenden Erfindung liegt die Aufgabe zugrunde, eine Einrichtung zur automatischen Messung der von einer Melkanlage ermolkenen Milchmenge zu entwickeln, die ein solches Mittel zur Überwachung des Prozesses der Messung der Milchmenge aufweist, das eine digitale Modellierung des optimalen Volumens der Messkammer vom Schwimmermilchzähler nach dem physikalischen Modell unter realen Bedingungen des Betriebes der Einrichtung im Bereich der erforderlichen Auswahl von Messungen ermöglicht, wodurch man die Genauigkeit und Zuverlässigkeit der erhaltenen Messergebnisse bei der Messung der Milchmenge erhöhen kann.

Diese Aufgabe wird dadurch gelöst, dass in einer Einrichtung zur automatischen Messung der von einer Melkanlage ermolkenen Milchmenge, enthaltend einen Schwimmermilchzähler, dessen Aufnahmekammer mittels eines Eintrittsstutzens mit einer Vakuummilchleitung der Melkanlage verbunden ist, und dessen miteinander in Verbindung stehende Aufnahmekammer und Messkammer mittels Austrittsstutzen mit einem Vakuummilchsammelgefäss der Melkanlage verbunden sind, das mit einem Vakuumsystem der Melkanlage und mit einer Milchpumpe der Melkanlage in Verbindung steht und einen in diesen untergebrachten Hohlschaft aufweisen, wobei am unteren Ende dieses Schaftes ein Ventil und am oberen Ende ein Magnet angeordnet ist, welcher bei der Bewegung des Schaftes mit einer Gerkon-Einrichtung zusammenwirkt, die mit einer digitalen elektronischen Recheneinheit zur Registrierung der von der Melkanlage ermolkenen Milchmenge elektrisch verbunden ist, erfindungsgemäss, eine mit der Milchpumpe verbundene Einheit zur Einstellung des Schwimmermilchzählers auf eine optimale Dosis der frisch von einer Kuh ermolkenen Milch vorgesehen ist.

Es ist wünschenswert, dass die Einheit zur Einstellung des Schwimmermilchzählers auf eine optimale Dosis der frisch von einer Kuh ermolkenen Milch ein Mittel zur Messung der Normalmasse der frisch von einer Kuh ermolkenen Milch enthält, das mittels einer Einzelrohrleitung mit der Milchpumpe verbunden ist.

Es ist vorteilhaft, dass das Mittel zur Messung der Normalmasse der frisch von einer Kuh ermolkenen Milch einen Wagen mit einer Waage, eine Messkammer für Milch, die mit der Atmosphäre in Verbindung steht und auf der Waage angeordnet ist, sowie ein Element enthält, das für den Abfluss der frisch ermolkenen Milch in diese Messkammer aus der Einzelrohrleitung geeignet ist, welche dieses Mittel mit der Milchpumpe verbindet, wobei dieses Element teilweise innerhalb dieser Messkammer und teilweise ausserhalb dieser angeordnet und oberhalb dieser Kammer starr befestigt ist.

Die Einheit zur Einstellung des Schwimmermilchzählers auf eine optimale Dosis der frisch von einer Kuh ermolkenen Milch kann zusätzlich ein Mittel zur Wiedergabe von mehrfach vorgenommenen Messungen der Normaldosen der frisch von einer Kuh ermolkenen Milch enthalten, das mittels Einzelrohrleitungen entsprechend mit dem Mittel zur Messung der Normalmasse der frisch von einer Kuh ermolkenen Milch, mit der Vakuummilchleitung und mit der Aufnahmekammer des Schwimmermilchzählers verbunden ist.

Es ist vorteilhaft, dass das Mittel zur Wiedergabe

von mehrfach vorgenommenen Messungen der Normaldosen der frisch von einer Kuh ermolkenen Milch ein Zweipositions-Regelglied ist, das an der Einzelrohrleitung angeordnet ist, welche dieses Mittel mit dem Mittel zur Messung der Normalmasse der frisch von einer Kuh ermolkenen Milch verbindet, sowie ein Element enthält, das für die Entnahme der frisch ermolkenen Milch aus der Messkammer des Mittels zur Messung geeignet ist, wobei dieses Element mit der Rohrleitung verbunden ist, an welcher das Zweipositions-Regelglied angeordnet ist, teilweise innerhalb dieser Messkammer und teilweise ausserhalb dieser Messkammer untergebracht und oberhalb derselben starr befestigt ist.

Eine solche Ausführungsform der angemeldeten Einrichtung zur automatischen Messung der von einer Melkanlage ermolkenen Milch gewährleistet eine hohe Genauigkeit der Messungen und Zuverlässigkeit der erhaltenen Messergebnisse bei der Messung der von einer Melkanlage ermolkenen Milchmenge, wodurch es möglich wird, die Wirksamkeit und die Genauigkeit bei der Durchführung von zootechnischen, Veterinär- und Selektionsarbeiten mit einer Kuhherde zu erhöhen, die Leistung dieser Herde zu steigern sowie den Arbeitsaufwand für den Betrieb und metrologische Sicherstellung der Milchzähler zu vermindern und kommerzielle Verrechnungen zwischen den Beschäftigten einer Farm und den Abnehmern der Produktion zu sichern.

Beschreibung

Nachstehend wird die Erfindung anhand eines konkreten Ausführungsbeispiels und einer Zeichnung erläutert, in der ein Funktionsschaltplan der erfindungsgemässen Einrichtung zur automatischen Messung der von einer Melkanlage ermolkenen Milchmenge dargestellt ist.

Ausführungsform der Erfindung

Die erfindungsgemässe Einrichtung zur automatischen Messung der von einer Melkanlage ermolkenen Milchmenge enthält einen Schwimmermilchzähler 1.

Der Schwimmermilchzähler 1 umfasst ein Gehäuse 2, das mit Milch 3 gefüllt wird. Das Gehäuse 2 weist einen Eintrittsstutzen 4 und zwei Austrittsstutzen 5 und 6 auf, von denen der Austrittsstutzen 5 mittels eines Bügels 7 am Gehäuse 2 starr befestigt ist. Innerhalb des Gehäuses 2 ist ein Hohlschaft 8 untergebracht, der teilweise im Gehäuse 2 angeordnet ist und teilweise aus diesem heraustritt, wobei im Körper dieses Schaftes 8 eine Öffnung 9 vorgesehen ist, über welche der Hohlraum des Schaftes 8 bei der Hebung desselben ausserhalb des Gehäuses 2 mit der Atmosphäre verbunden ist. Am unteren Ende des Hohlschaftes 8 ist ein Ventil 10 befestigt, das in die Milch 3 eingetaucht und zum Absperren einer Öffnung 11 geeignet ist, welche in einer Trennwand 12 ausgebildet ist, die den Raum des Gehäuses 2 in zwei miteinander in Verbindung stehende Kammern, u.zw. eine Messkammer 13 und eine Aufnahmekammer 14 einteilt. Die Messkammer 13 wird vollständig mit der Milch 3 gefüllt, in der sich das Ventil 10 befindet, während die Aufnahmekammer 14 etwa zur Hälfte mit Milch 3 angefüllt wird. Im mittleren Teil des Hohlschaftes 8, der in der Aufnahmekammer 14 angeordnet ist, ist ein Schwimmer 15 mit einen Gewicht 16 befestigt. An seinem oberen, ausserhalb der Aufnahmekammer 14 des Gehäuses 2 angeordneten Ende trägt der Hohlschaft 8 einen Magnet 17, der an einer Buchse 18 befestigt ist, welche am Hohlschaft 8 mittels einer Schraube 19 in Längsrichtung des Hohlschaftes 8 bewegbar angeordnet ist.

Bei der Bewegung des Hohlschaftes 8 steht der Magnet 17 mit einer Gerkoneinrichtung 20 in Wechselwirkung, welche mit einer digitalen elektronischen Recheneinheit 21 zur Registrierung der Milchmenge elektrisch verbunden ist, die ein Steuerpult 22 aufweist.

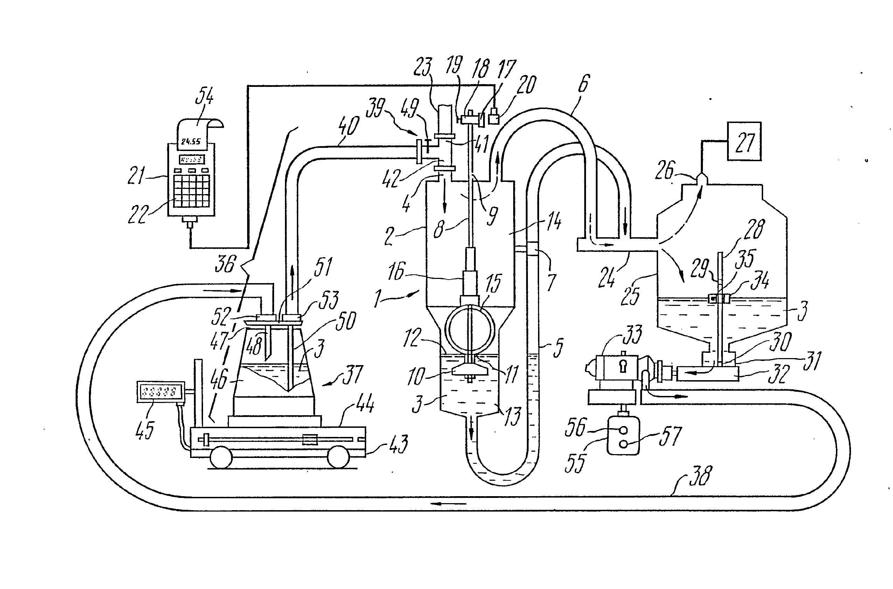

Der Eintrittsstutzen 4 der Aufnahmekammer 14 des Gehäuses 2 des Milchzählers 1 ist mit einer Vakuummilchleitung 23 einer Melkanlage verbunden. (In der Zeichnung ist die Melkanlage nicht vollständig dargestellt, weil sie nicht Gegenstand der vorliegenden Erfindung ist. In der Zeichnung sind einzelne Baugruppen der Melkanlage abgebildet, die für die Darstellung der Anschlüsse und des Betriebes der angemeldeten Einrichtung notwendig sind. Als Melkanlage kann eine beliebige Melkanlage verwendet werden, die den auf diesem Gebiet tätigen Spezialisten bekannt und für die vorliegenden Zwecke geeignet ist).

Die Austrittsstutzen 5 und 6 der Messkammer 13 bzw. der Aufnahmekammer 14 des Gehäuses 2 des Milchzählers 1 sind mit einem Eintrittsstutzen 24 eines Vakuummilchsammelgefässes 25 der Melkanlage verbunden. Das Vakuummilchsammelgefäss 25 steht über einen Austrittsstutzen 26 mit dem Vakuumsystem 27 der Melkanlage in Verbindung. Ein Teil des Innenraumes des Vakuummilchsammelgefässes 25 ist mit Milch 3 gefüllt. Innerhalb des Vakuummilchsammelgefässes 25 ist ein Hohlschaft 28 aus einem unmagnetischen Werkstoff untergebracht, in dem Gerkoneinrichtungen 29 und 30 zum automatischen Öffnen und Absperren des Milchstromes angeordnet sind, der über einen Abflußstutzen 31 des Milchsammelgefässes 25 und eine Rohrleitung 32 einer Milchpumpe 33 zugeleitet wird. Das Öffnen und Absperren des Milchstromes erfolgen je nach dem Füllen des Milchsammelgefässes 25 mit Milch 3 und der dadurch ausgelösten Bewegung eines Schwimmers 34 mit einem Magnet 35 an dem Hohlschaft 28, wobei der Magnet 35 mit den Gerkoneinrichtungen 29 und 30 zusammenwirkt, welche in den Steuerstromkreis der Milchpumpe 33 in Reihe geschaltet sind.

Bei der vorliegenden Ausführungsvariante der erfindungsgemässen Einrichtung ist eine Einheit 36 zur Einstellung des Schwimmermilchzählers 1 auf eine optimale Dosis der frisch von einer Kuh ermolkenen Milch vorgesehen, die mit der Milchpumpe 33 verbunden ist.

Die Einheit 36 zur Einstellung enthält ein Mittel 37 zur Messung der Normalmasse der frisch von einer Kuh ermolkenen Milch, das mittels einer Einzelrohrleitung 38 (bei der vorliegenden Ausführungsvariante ist das ein biegsamer Schlauch) mit der Milchpumpe 33 verbunden ist, sowie ein Mittel 39 zur Wiedergabe von mehrfach vorgenommenen Messungen der Normaldosen der frisch von einer Kuh ermolkenen Milch, das mittels Einzelrohrleitungen 40,41,42 mit dem Mittel 37 zur Messung der Normalmasse der frisch von einer Kuh ermolkenen Milch, mit der Vakuummilchleitung 23 und der Aufnahmekammer 14 des Schwimmermilchzählers 1 entsprechend verbunden ist. Dadurch wird es möglich, eine digitale Modellierung von optimalen Milchdosen vorzunehmen, eine mehrfache Wiedergabe der Messergebnisse bei der Messung von Milcherträgen zu verwirklichen und die Genauigkeit dieser Messergebnisse nach den Bewertungen der ausgewählten, während der statistischen Kontrolle erfassten Daten unter realen Bedingungen des Betriebes zu kontrollieren sowie die Ergebnisse von einzelnen Messungen der Milcherträge miteinander und mit der Normalmasse der frisch von einer Kuh ermolkenen Milchmenge zu vergleichen, was die Zuverlässigkeit der Ergebnisse erhöht. Die digitale Modellierung von optimalen Milchdosen unter realen Bedingungen des Betriebes der Melkanlage gestattet es auch, die Eigenschaften des zu messenden Mediums, der Milch, beim Vergleich zu den Eigenschaften der Normalmasse der frisch von einer Kuh ermolkenen Milch zu erfassen sowie durch eine Korrektur der gewonnenen Ergebnisse auch die konstruktiven Besonderheiten des zu verwendenden Milchzählers zu berücksichtigen.

Das Mittel 37 zur Messung der Normalmasse der frisch von einer Kuh ermolkenen Milch enthält einen Wagen 43 mit einer Waage 44, die einen elektronischen Digitalanzeiger 45 zur Anzeige der Masse der frisch ermolkenen Milch aufweist, wobei der Skalenwert dieses Anzeigers 45 ein sechstel des zulässigen Toleranzfeldes der vorgegebenen Genauigkeit von Messungen der Milchmenge (nach Anforderungen der Zootechnik, Veterinärmedizin und der Selektion, welche an die Genauigkeit der Messung der Milchmenge gestellt werden) nicht übersteigt. Auf der Waage 44 ist eine Messkammer 46 aufgestellt, die mit Milch 3 angefüllt wird und mit der Atmosphäre in Verbindung steht, d.h. an ihrer Stirnseite 47 offen ist.

Das Mittel 37 enthält auch ein Element 48, das für den Abfluss der frisch ermolkenen Milch in die Messkammer 46 aus der Rohrleitung 38 geeignet ist, wobei es sich teilweise innerhalb der Kammer 46 und teilweise ausserhalb derselben befindet.

Das Mittel 39 zur Wiedergabe von mehrfach vorgenommenen Messungen der Normaldosen der frisch von einer Kuh ermolkenen Milch enthält ein Zweipositions-Regelglied 49 (bei der vorliegenden Ausführungsvariante der erfindungsgemässen Einrichtung - ein Ventil), das an der Rohrleitung 40 angebracht ist, sowie ein Element 50, das für die Entnahme der frisch ermolkenen Milch aus der Messkammer 46 geeignet, mit der Rohrleitung 40 verbunden sowie teilweise innerhalb der Messkammer 46 und teilweise ausserhalb dieser Kammer 46 angeordnet ist.

An der Stirnseite 47 der Kammer 46 ist ein Deckel 51 vorgesehen, der in einem Abstand von dieser Stirnseite 47 angeordnet ist. Durch den Deckel 51 sind die Elemente 48 und 50 hindurchgeführt, welche bei der vorliegenden Ausführungsvariante der erfindungsgemässen Einrichtung in Form von Rohren mit abgeschrägten Stirnen ausgebildet sind. Die Elemente 48 und 50 sind auf dem Deckel 51 mittels Muttern 52 und 53 befestigt und mit den Rohrleitungen 38 bzw. 40 verbunden, welche in unmittelbarer Nähe der Zone der Verbindung mit den Elementen 48 und 50 starr befestigt sind.

All dies gewährleistet eine freie Unterbringung der Elemente 48 und 50 im Innenraum der Messkammer 46 ohne unmittelbare Berührung mit dieser, wobei das Element 50 zum Boden der Kammer 46 heruntergelassen ist, ohne mit diesem in Berührung zu treten.

Die erfindungsgemässe Einrichtung zur automatischen Messung der von einer Melkanlage ermolkenen Milchmenge hat folgende Wirkungsweise.

In der Zeichnung ist mit einem Pfeil, der mit einer ausgezogenen Linie gezeichnet ist, die Zuführungsrichtung der Milch und mit einem Pfeil, der mit einer gestrichelten Linie gezeichnet ist, die Zuführungsrichtung der Luft dargestellt.

Der Betrieb der Einrichtung zur automatischen Messung der von einer Melkanlage ermolkenen Milchmenge setzt sich aus zwei Etappen, u.z. einer vorläufigen und einer Hauptetappe zusammen.

In der vorläufigen Etappe wird ein Arbeitsgang zur Imitation eines realen Melkprozesses zur Einstellung des Schwimmermilchzählers 1 auf eine optimale Dosis nach der Normalmasse der frisch von einer Kuh ermolkenen Milch vorgenommen. Zu diesem Zweck wird der Milchertrag der frisch von einer Kuh ermolkenen Milch 3 in die Messkammer 46 eingebracht und auf der Waage 44 gewogen, danach wird der Wert der Normalmasse der frisch ermolkenen Milch vom elektronischen Digitalanzeiger 45 mit einer Genauigkeit registriert, die nicht weniger als ein Sechstel des zulässigen Toleranzfeldes der vorgegebenen Messgenauigkeit ausmacht. Im weiteren wird die elektronische Recheneinheit 21 zur Registrierung eingeschaltet, und in den Speicher dieser Einheit 21 wird der numerische Wert der Grösse der bekannten Milchdosis in der Messkammer 13 des Schwimmermilchzählers 1 eingegeben.

Des weiteren wird das Regelglied 49 geöffnet, und
der Innenraum der Messkammer 46, der mit der frisch
ermolkenen Milch 3 gefüllt ist, wird mittels der Einzelrohrleitungen 40,41,42 und des Elementes 50 zur Milchentnahme mit der Vakuummilchleitung 23 der Melkanlage
verbunden. Infolge des Unterschiedes zwischen dem atmosphärischen Druck in der Messkammer 46 und dem Unterdruck in der Vakuummilchleitung 23 der Melkanlage wird
die Milch 3 aus der Messkammer 46 über das Element 50
zur Milchentnahme, die Einzelrohrleitungen 40 und 42 in
die Aufnahmekammer 14 und die Messkammer 13 des Schwimmermilchzählers 1 befördert.

Die Kammern 14 und 13 werden dabei mit     Milch 3
mit einer Zuführungsgeschwindigkeit angefüllt, die dem
realen Milchstrom beim Melken der Kühe mittels einer
Melkanlage entspricht. Die Einstellung der erforderlichen Geschwindigkeit der Zuführung der Milch 3 in den
Milchzähler 1 in der Etappe der Imitation des Melkens
und die Einstellung des Milchzählers 1 auf eine optimale
Dosis wird mittels des Regelgliedes 49 vorgenommen. Je
nach dem Füllen der Kammern 14 und 13 des Milchzählers 1
taucht der Schwimmer 15 mit dem Hohlschaft 8 und dem
zur Regelung der Schwimmerfähigkeit des Schwimmers 15
dienenden Gewicht 16 auf, wobei das Ventil 10 und die
Buchse 18 mit dem Magnet 17, deren Lage am oberen Ende
des Hohlschaftes 8 mittels der Schraube 19 eingestellt
wird, ebenfalls auftauchen. Nachdem die Aufnahmekammer 14
des Milchzählers 1 etwa zur Hälfte mit der Milch 3 angefüllt ist, wird die Öffnung 11 in der Trennwand 12 mit
dem Ventil 10 abgesperrt.

Dabei verlässt die Öffnung 9 des Hohlschaftes 8
die Aufnahmekammer 14 des Milchzählers 1, so dass der
Luftdruck über die Öffnung 9, den Innenraum des Hohlschaftes 8 und das offene untere Ende des Hohlschaftes 8 eine Portion der Milch 3 aus der Messkammer 13 über den Austrittsstutzen 5 des Milchzählers 1 und den Eintrittsstutzen 24 in das Vakuummilchsammelgefäss 25 verdrängt. Dabei werden die Gas-Luft-Komponente und die flüssige Komponente der frisch ermolkenen Milch 3 dadurch voneinander getrennt, dass die Gas-Luft-Komponente über die Einzelrohrleitung 42, den Austrittsstutzen 6 der Aufnahmekammer 14 des Milchzählers 1, den Eintrittsstutzen 24 des Milchsammelgefässes 25 und den Austrittsstutzen 26 in des Vakuumsystem 27 der Melkanlage abgeleitet wird.

Nachdem der Hohlschaft 8 in der Aufnahmekammer 14 die obere Stellung erreicht hat, schliesst das Feld des Magnetes 17 den Kontakt der Gerkon-Einrichtung 20, so dass die Portion der Milch 3 von der Einheit 21 fixiert wird. Die laufenden Ergebniss der Summierung von einzelnen Dosen der Milch 3 werden auf dem Digitalanzeiger der Einheit 21 wiedergegeben, während das Gesamtergebnis der Messung der ermolkenen Milchmenge auf dem Band 54 dieser Einheit aufgezeichnet wird.

Nach der Auslieferung einer Dosis der Milch 3 und nach der Beförderung der Milch in das Milchsammelgefass 25 wird die Messkammer 13 des Milchzählers 1 entleert, wonach sie bei atmosphärischem Druck mit Luft gefüllt wird. Unter Einwirkung des dabei entstehenden Druckunterschiedes in der Aufnahmekammer 14 und der Messkammer 13 und unter Einwirkung der Schwerkraft des Hohlschaftes 8 und der an diesem angeordneten Elemente geht der Hohlschaft 8 nieder und dessen Öffnung 9 gelangt in den Innenraum der Aufnahmekammer 14, wobei der Druck in den Kammern 14 und 13 ausgeglichen wird.

Die Messkammer 13 wird mit einer neuen Portion der frisch ermolkenen Milch 3 gefüllt, und der Prozess der Messung von einzelnen Dosen der frisch ermolkenen Milch 3 wird automatisch solange wiederholt, bis die gesamte Milch 3, welche aus der Messkammer 46 zugeführt wird, den Milchzähler 1 passiert hat.

Nach der Vollendung der vorläufigen Etappe der Messung von einzelnen Dosen der Normalmenge der frisch ermolkenen Milch 3 werden die Anzeigewerte des elektronischen Digitalanzeigers 45 an der Waage 44 mit den Werten auf dem Band 54 der elektronischen Recheneinheit 21 verglichen. Auf diese Weise wird nach dem ermittelten Differenzbetrag zwischen den Anzeigewerten eine optimale Dosis der frisch ermolkenen Milch bestimmt, die vom Schwimmermilchzähler 1 gemessen wird.

Um den erforderlichen Umfang der ausgewählten Messungen der Normalmasse der frisch ermolkenen Milch 3 in der vorläufigen Etappe der Einstellung des Milchzählers 1 auf die Auslieferung von optimalen Dosen zu erzielen, werden die oben erwähnten Operationen mehrfach im ausgewählten Umfang von statistischen Daten wiederholt, die eine entsprechende Zuverlässigkeit der gewonnenen Messergebnisse der in der vorläufigen Etappe vorgenommenen Messungen gewährleisten.

Je nach der Vollendung eines jeden Zyklus der in dieser Etappe vorgenommenen Messungen zur Bestimmung einer optimalen Dosis für den Schwimmermilchzähler 1 wird der Betrag dieser Dosis allmählich mittels der elektronischen Recheneinheit 21 und des Steuerpultes 22 nach den vorhandenen Programmen und den Korrekturalgorithmen präzisiert.

Die Wiedergabe von mehrfach vorgenommenen Messungen wird wie folgt durchgeführt.

Die Normalmasse der frisch von einer Kuh ermolkenen Milch wird nach der Vollendung des ersten Zyklus der Messungen von einzelnen Dosen der Milch 3 durch den Milchzähler 1 gemäss der obenbeschriebenen Folgerichtigkeit im Vakuummilchsammelgefäss 25 gesammelt. Dabei erreicht, mittels des im Milchsammelgefäss 25 vorhandenen Schaftes 28 aus unmagnetischem Werkstoff mit in diesem Schaft untergebrachten Gerkon-Einrichtungen 29 und 30,

der Schwimmer 34 mit dem an diesem angebrachten Magnet 35 den oberen Stand der Füllung des Milchsammelgefässes 25 mit der frisch von einer Kuh ermolkenen Milch 3, der dem Stand der Anordnung der Gerkon-Einrichtung 29 im Schaft 28 entspricht. Infolge der Einwirkung des Feldes des Magnetes 35 auf den Kontakt der Gerkon-Einrichtung 29 schliesst dieser den Steuerstromkreis der Milchpumpe 33, und die Milch 3 fliesst über den Abflusstutzen 31 des Milchsammelgefässes 25, die Rohrleitung 32, die Milchpumpe 33, die Einzelrohrleitung 38 und das Abflusselement 48 in die Messkammer 46, welche auf der Waage 44 angeordnet ist, die den elektronischen Digitalanzeiger 45 zur Anzeige der Normalmasse der frisch ermolkenen Milch in der Messkammer 46 aufweist.

Die Zuführung der frisch ermolkenen Milch 3 aus dem Milchsammelgefäss 25 erfolgt kontinuierlich mittels der Milchpumpe 33 so lange, bis der Stand der Milch 3 in dem Milchsammelgefäss 25 den Stand der Gerkon-Einrichtung 30 erreicht hat. Das Feld des Magnetes 35 wirkt dabei auf den Kontakt der Gerkon-Einrichtung 30 ein, der den Steuerstromkreis der Milchpumpe 33 unterbricht, wonach der Zyklus bis zur Gewinnung des erforderlichen ausgewählten Umfanges der mehrfach vorgenommenen Messungen der Normalmasse der frisch von einer Kuh ermolkenen Milch 3 wiederholt wird. Zum Ein- bzw. Ausschalten der Pumpe 33 dient ein Pult 55, das mit Drucktasten 56 und 57 zum Starten bzw. Stoppen versehen ist.

Als Ergebnis der vorläufigen Etappe wird von der elektronischen Recheneinheit 21 ein optimaler und zuverlässiger Wert der Dosis der frisch ermolkenen Milch geliefert, welche Dosis vom Schwimmermilchzähler 1 real gemessen wird, und dann wird der Wert dieser Dosis in den Speicher der Einheit 21 eingegeben.

Nach der Vollendung der vorläufigen Etappe der Einstellung des Milchzählers 1 auf eine optimale Dosis wird die Einzelrohrleitung 40 vom Regelglied 49 abgesperrt, so dass die Messkammer 46 mit den Kammern 14 und 13 des Milchzählers 1 nicht mehr verbunden ist.

Die Hauptetappe des Betriebes der angemeldeten Einrichtung zur automatischen Messung der von einer Melkanlage ermolkenen Milchmenge ist hinsichtlich der Arbeit des Schwimmermilchzählers 1 der vorläufigen Etappe völlig identisch. Dabei ist die Einheit 36 zur Einstellung des Milchzählers 1 auf eine optimale Dosis der von einer Kuh ermolkenen Milch 3 am technologischen Prozess nicht beteiligt, weil diese Einheit 36 vom Regelglied 49 blockiert ist. Mittels des Wagens 43 werden dabei die Waage 44 und die Messkammer 46 aus der Arbeitszone des Milchzählers 1 zu deren Lagerungsstelle geführt, wo sie bis zur nächsten Einstellung des Schwimmermilchzählers 1 und bis zur Wiedergabe von mehrfach vorgenommenen Messungen gelagert werden. Die Rohrleitungen 40 und 38 können mittels der Muttern 52 bzw. 53 für die Reinigung abgebaut werden.

Beim Melken der Kühe im Betriebszustand der Hauptetappe der Arbeit des Milchzählers 1 wird die Einzelrohrleitung 38 von der Milchpumpe 33 getrennt, wobei an diese letztere eine Rohrleitung (nicht dargestellt) angeschlossen wird, über welche die ermolkene Milch einer Kühlanlage oder zur Vorbearbeitung gemäss der in der Milchfarm verwendeten Technologie zugeführt wird.

Die angemeldete Einrichtung gehört zu der neuen aussichtsreichen Klasse der Milchertrag-Messer vom "intellektuellen" Typ und kann in beliebigen bekannten Melkanlagen Anwendung finden.

Die Ausbildung eines Messkanals bei den Melkanlagen "Schwimmermilchzähler - elektronische Recheneinheit" trägt zur Erweiterung der Betriebs- und Funktionsmöglichkeiten der Einrichtung bei.

Bei der Anwendung der angemeldeten Einrichtung werden die Einstellung, die Prüfung und der Betrieb des Milchzählers unter realen Einsatzbedingungen einheitlich durchgeführt, was die Genauigkeit der Messung

- 18 -

der an den Melkanlagen ermolkenen Milchmenge erhöht.

Die Verwendung der Einheit zur Einstellung in der erfindungsgemässen Einrichtung hat es zum erstenmal gestattet, die mathematischen und physikalischen Modelle des Prozesses der Messung von Milcherträgen unter realen Bedingungen des Betriebes und mit Berücksichtigung der Eigenschaften des zu messenden Mediums und des tatsächlichen funktionstechnischen Zustandes der Melkanlage miteinander in Übereinstimmung zu bringen, wodurch eine hohe Zuverlässigkeit und Wahrhaftigkeit der erhaltenen Messergebnisse gewährleistet werden.

Die erfindungsgemässe Einrichtung ist ausserdem einfach zu bedienen.

Gewerbliche Anwendbarkeit

Die Einrichtung zur automatischen Messung der von einer Melkanlage ermolkenen Milchmenge kann in beliebigen bekannten Melkanlagen verwendet werden, in denen das Sammeln und die Erfassung von Milchmengen vorgesehen sind, die bei einer Kuh oder bei einer Gruppe von Kühen ermolken werden. Die mit Hilfe der erfindungsgemässen Einrichtung gewonnene genaue Information über die ermolkene Milchmenge kann in automatischen Steuerungssystemen in Milchfarmen, bei der Zusammenstellung von optimalen Rationen für die Fütterung der Kühe nach ihren Milcherträgen, für die Durchführung einer planmässigen zootechnischen, Veterinär- und Selektionsarbeit zur Erhöhung der Milcherträge auf dem Wege einer vollständigeren Nutzung des genetischen Leistungspotentials einer jeden Kuh verwendet werden. Eine genaue Führung der Arbeit mit Kühen wird bei Verwendung der erfindungsgemässen Einrichtung durch Ermittlung einer genauen Primärinformation über ihre Milcherträge gewährleistet.

PATENTANSPRÜCHE

1. Einrichtung zur automatischen Messung der von einer Melkanlage ermolkenen Milchmenge, enthaltend einen Schwimmermilchzähler (1) zur Messung der Milch (3), dessen Aufnahmenkammer (14) mittels eines Eintrittsstutzens (4) mit einer Vakuummilchleitung (23) der Melkanlage verbunden ist, und dessen miteinander in Verbindung stehende Aufnahmekammer (14) und Messkammer (13) mittels Austrittsstutzen (6,5) mit einem Vakuummilchsammelgefäss (25) der Melkanlage verbunden sind, das mit einem Vakuumsystem (27) der Melkanlage und mit einer Milchpumpe (33) der Melkanlage in Verbindung steht, und einen in diesen untergebrachten Hohlschaft (8) aufweisen, wobei am unteren Ende dieses Schaftes ein Ventil (10) und am oberen Ende ein Magnet (17) angeordnet sind, welcher bei der Bewegung des Schaftes (8) mit einer Gerkon-Einrichtung (20) zusammenwirkt, die mit einer digitalen elektronischen Recheneinheit (21) zur Registrierung der von der Melkanlage ermolkenen Milchmenge (3) elektrisch verbunden ist, dadurch g e - k e n n z e i c h n e t , dass sie eine mit der Milchpumpe (33) verbundene Einheit (36) zur Einstellung des Schwimmermilchzählers (1) zur Messung der Milch (3) auf eine optimale Dosis der frisch von einer Kuh ermolkenen Milch (3) enthält.

2. Einrichtung nach Anspruch 1, dadurch g e - k e n n z e i c h n e t , dass die Einheit (36) zur Einstellung des Schwimmermilchzählers (1) auf eine optimale Dosis der frisch von einer Kuh ermolkenen Milch (3) ein Mittel (37) zur Messung der Normalmasse der frisch von einer Kuh ermolkenen Milch (3) enthält, das mittels einer Einzelrohrleitung (38) mit der Milchpumpe (33) verbunden ist.

3. Einrichtung nach Anspruch 2, dadurch g e - k e n n z e i c h n e t , dass das Mittel (37) zur Messung der Normalmasse der frisch von einer Kuh ermolkenen Milch (3) einen Wagen (43) mit einer Waage (44), eine Messkammer (46) für Milch (3), die mit der Atmosphäre in Verbindung steht und auf der Waage (44) angeordnet ist, sowie ein Element (48) enthält, das für den Abfluss der frisch ermolkenen Milch (3) in diese Messkammer (46) aus der Einzelrohrleitung (38) geeignet ist, welche dieses Mittel (37) mit der Milchpumpe (33) verbindet, wobei dieses Element (48) teilweise innerhalb dieser Messkammer (46) und teilweise ausserhalb dieser angeordnet und oberhalb dieser Kammer (46) starr befestigt ist.

4. Einrichtung nach einem der Ansprüche 1 bis 3, dadurch g e - k e n n z e i c h n e t , dass die Einheit (36) zur Einstellung des Schwimmermilchzählers (1) auf eine optimale Dosis der frisch von einer Kuh ermolkenen Milch (3) zusätzlich ein Mittel (39) zur Wiedergabe von mehrfach vorgenommenen Messungen der Normaldosen der frisch von einer Kuh ermolkenen Milch (3) enthält , das mittels Einzelrohrleitungen (40,41,42) entsprechend mit dem Mittel (37) zur Messung der Normalmasse der frisch von einer Kuh ermolkenen Milch (3), mit der Vakuummilchleitung (23) und mit der Aufnahmekammer (14) des Schwimmermilchzählers (1) zur Messung der Milch (3) verbunden ist.

5. Einrichtung nach Anspruch 4, dadurch g e - k e n n z e i c h n e t , dass das Mittel (39) zur Wiedergabe von mehrfach vorgenommenen Messungen der Normaldosen der frisch von einer Kuh ermolkenen Milch (3) ein Zweipositions-Regelglied (49), das an der Einzelrohrleitung (40) angeordnet ist, welche dieses Mittel (39) mit dem Mittel (37) zur Messung der Normalmasse der frisch von einer Kuh ermolkenen Milch (3) verbindet, sowie ein Element (50) enthält, das für die Entnahme der frisch ermolkenen Milch (3) aus der Messkammer (46) des Mittels (37) zur Messung geeignet ist, wobei dieses Element mit der Rohrleitung (40) verbunden ist, an welcher das Zweipositions-Regelglied (49) angeordnet ist, teilweise innerhalb dieser Messkammer (46) und teilweise
ausserhalb dieser Messkammer (46) untergebracht und
oberhalb dieser starr befestigt ist.

# INTERNATIONAL SEARCH REPORT

International Application No PCT/SU 89/00049

## I. CLASSIFICATION OF SUBJECT MATTER (if several classification symbols apply, indicate all)

According to International Patent Classification (IPC) or to both National Classification and IPC

$IPC^4$    A 01 J 7/00

## II. FIELDS SEARCHED

### Minimum Documentation Searched

| Classification System | Classification Symbols |
|---|---|
| $IPC^4$ | A 01 J 7/00 |

Documentation Searched other than Minimum Documentation
to the Extent that such Documents are Included in the Fields Searched

## III. DOCUMENTS CONSIDERED TO BE RELEVANT

| Category | Citation of Document, with indication, where appropriate, of the relevant passages | Relevant to Claim No. |
|---|---|---|
| A | SU, A1, 1358857 (Opytno-konstruktorskoe bjuro nauchno-proizvodstvennogo obiedinenia "Kolos") 15 December 1987 (15.12.87), see the claims, the figures | 1-5 |
| A | SU, A1, 1410920 (Vserossiisky nauchno-issledovatelsky i proektno-tekhnologichesky institut mekhanizatsii i elektrifikatsii selskogo khozyaistva) 23 July 1988 (23.07.88), see the claims, figures 1-3 | 1-5 |
| A | WO, A1, 82/03965 (LEMMER HELMUT), see the claims, figures 1-2<br><br>& EP, A1, 78819, 18.05.83<br>DE, A1, 3118865, 02.12.82 | 1-5 |

* Special categories of cited documents:

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 4 July 1989 (04.07.89) | 15 August 1989 (15.08.89) |
| International Searching Authority | Signature of Authorized Officer |
| ISA/SU | |